(19) Europäisches Patentamt
European Patent Office
Office européen des brevets

(11) Publication number: **0 002 358**
**B1**

(12) # EUROPEAN PATENT SPECIFICATION

(45) Date of publication of patent specification: **04.11.81**

(51) Int. Cl.³: **C 08 F 8/44**

(21) Application number: **78300689.3**

(22) Date of filing: **28.11.78**

(54) **Process for forming a zinc neutralised sulphonated elastomeric polymer and composition thereof.**

(30) Priority: **29.11.77 US 855756**

(43) Date of publication of application:
**13.06.79 Bulletin 79/12**

(45) Publication of the grant of the European patent:
**04.11.81 Bulletin 81/44**

(84) Designated Contracting States:
**BE DE FR GB NL**

(56) References cited:
**FR - A - 2 201 310**
**FR - A - 2 311 785**
**US - A - 3 642 728**

(73) Proprietor: **Exxon Research and Engineering Company**
**P.O.Box 390 200 Park Avenue**
**Florham Park New Jersey 07932 (US)**

(72) Inventor: **Makowski, Henry Stanislaus**
**2045 Winding Brook Way**
**Scotch Plains New Jersey (US)**
Inventor: **Klein, Robert Raymond**
**40 Fern Place**
**Berkeley Heights New Jersey (US)**
Inventor: **Lundberg, Robert Dean**
**4 Brian Drive**
**Bridgewater New Jersey (US)**
Inventor: **Bock, Jan**
**500 Juniper Lane**
**Bridgewater New Jersey (US)**

(74) Representative: **Field, Roger Norton et al,**
**Hanover Court 5 Hanover Square**
**London W1R OHQ (GB)**

**EP 0 002 358 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# Process for forming a zinc neutralised sulphonated elastomeric polymer and composition thereof

The present invention relates to a process for the manufacture of neutralized sulfonated elastomeric polymers having both improved physical and rheological properties.

The production of neutralised sulphonated elastomeric polymers using a zinc salt has been described before, for example in French specification 2311785 and U.S. 3642728.

We have now devised a process for the production of neutralised polymers which are substantially gel-free. According to this invention a process for preparing a cement of a zinc neutralised sulfonated polymer dissolved in a non-reactive solvent, said polymer being derived from an elastomer having olefinic unsaturation sites wherein the polymer has from 0.1 to 10.0 mole % olefinic unsaturation, said cement having a Brookfield viscosity at 0.6 rpm at a temperature of from 25°C up to no more than 35°C of less than 50 Pais (50,000) cps) said sulfonated polymer having 10 to 50 meq. of sulfonate groups per 100 gm polymer and containing less than 5 wt % gel, comprises neutralising said sulfonated polymer dissolved in said non-reactive solvent with excess zinc acetate dissolved in a solvent system consisting of methanol or a mixture of methanol and water to form said zinc neutralised sulfonated polymer wherein the volume % of methanol based on non-reactive solvent is at least 2 and less than 10, the volume % of water based on the methanol and water mixed solvent is less than 25 and the concentration of zinc acetate dihydrate in the solvent system is 5 to 35 gm per 100 gm of solvent.

After the neutralization of sulfonated cement has been completed, stearic acid can be optionally added to the cement, wherein the excess zinc acetate reacts *in situ* with the stearic acid thereby forming the preferential plasticizer, zinc stearate, for the zinc neutralized sulfonate groups. This improved process allows for complete neutralization of the sulfonate groups and the formation of cements which are easily handled and pumped.

The elastomeric polymers used in the process of the present invention are derived from elastomers having olefinic unsaturation sites wherein the polymer has from 0.1 to 10.0 mole% olefinic unsaturation. The unsaturation sites can be in the polymer backbone, pendant therefrom or cyclic. In particular, the unsaturated polymers used in the process of this invention include low unsaturated polymers such as Butyl rubber or EPDM polymers.

The sulfonated polymers used in the process of this invention contain less than 5 wt.% gel, more preferably less than 3% and most preferably less than 1% as measured by stirring a given weight of polymer in a solvent comprised of 95 volumes toluene/5-volumes methanol at a concentration of 50g/liter for 24 hours, allowing the mixture to settle, withdrawing a weighed sample of the supernatant solution and evaporating to dryness.

In the practice of this invention, the molecular weight of the elastomeric polymer and the concentraion of the elastomeric polymer in the non-reactive sulfonation solvent are very important. In order to have a viable process, the neutralized sulfonated cement at the end of the process must have sufficiently low viscosity so that the cement may be properly handled with pumping operations, cleaning operations and the like. The major factors which contribute to the viscosity of the final neutralized sulfonated cement are molecular weight of the base elastomeric polymer, the concentration of the elastomeric polymer in the non-reactive sulfonation cement, the relative amount of sulfonate groups incorporated into the elastomeric polymer, the polar solvent used in reducing ionic associations thereby reducing the viscosity of the neutralized cement, and the amount of water in the cement.

In order to have an economical process, it is preferable to sulfonate elastomeric polymer cements containing at least 50 g elastomeric polymer per liter of non-reactive solvent. This situation occurs because in a commercial manufacturing process, solvents must be recovered and recycled. The more solvent recycled per unit elastomeric polymer product, the more expensive the product. In the present invention, the preferred elastomeric polymer concentration in non-reactive solvent is at least 50g/liter.

In addition, it is necessary that the elastomeric polymer cements be low in viscosity. Sulfonation of the polymer cement does not result in substantial viscosity increases; however, neutralization results in very large solution viscosity increases, or in the extreme gel, due to the ionic associations. Therefore, it is important to keep the starting cement viscosities low by using polymer concentrations as low as economically feasible. However, high polymer concentrations are still possible if the molecular weights or Mooney viscosities are low. It is important therefore in the practice of this invention to use elastomeric polymers with as low Mooney viscosities as possible.

It has been found that neutralized sulfonated polymers possess good physical properties even if the Mooney viscosity (ML, 1 + 8, 100°C) of the starting polymer is 5. On the other hand, at the high Mooney viscosities when cements containing 50 g polymer/liter solvent are sulfonated and neutralized extremely high final cement viscosities are obtained. The process of this invention can be practised when the unsulphonated elastomeric polymer cement at a concentration of 50 g polymer/liter of non-reactive solvent possesses at 25°C a Brookfield viscosity at 0.6 rpm of 2500 centipoises (cps) or less. The Mooney viscosity (ML, 1 + 8, 100°C) of the elastomeric polymer is preferably 5 to 60, more preferably 10 to 50, and most preferably 15 to 25, for example 20 or less.

The expression "Butyl rubber" as employed in the specification and claims is intended to include copolymers made from a polymerization reaction mixture having therein from 70 to 99.5% by weight of an isoolefin which has 4 to 7 carbon atoms, e.g. isobutylene, and 0.5 to 30% by weight of a conjugated multiolefin having from 4 to 14 carbon atoms, e.g. isoprene. The resulting copolymer contains 85 to 99.8% by weight of combined isoolefin and 0.2 to 15% of combined multiolefin. The preparation of Butyl rubber is described in U.S. Patent 2,356,128.

For the purposes of this invention, the Butyl rubber may have incorporated therein from 0.2 to 10% of combined multiolefin; preferably 0.5 to 6%; more preferably 1 to 4%, e.g. 2%.

Illustrative of such a Butyl rubber is Exxon Butyl 365 (Exxon Chemical Co.), having a mole% unsaturation of 2.0 and a Mooney viscosity (ML, 1 + 8, 100°C) of 45. (The word "Exxon" is a registered Trade Mark at least in the United Kingdom)

Very low molecular weight Butyl rubbers, i.e. Butyl rubbers having a viscosity average molecular weight of 5,000 to 85,000 and a mole% unsaturation of 3 to 4% may be sulfonated. Preferably, these polymers have a viscosity average molecular weight of 25,000 to 60,000.

The term "EPDM" is used in the sense of its difinition as found in ASTM D-1418-64 and is intended to mean a terpolymer containing ethylene and propylene in the backbone and unsaturation in a side chain. Illustrative methods for producing these terpolymers are found in U.S. Patent 3,280,082, British Patent 1,030,289 and French Patent 1,386,600. The preferred terpolymers contain 45 to 75 wt.% ethylene and 1 to 10 wt.% of a diene monomer, the balance of the polymer being propylene. Preferably, the polymer contains 45 to 70 wt.% ethylene, e.g. 50 wt.% and 2.6 to 8.0 wt.% diene monomer, e.g. 5.0 wt.%. The diene monomer is preferably a non-conjugated diene.

Illustrative of these non-conjugated diene monomers which may be used in the EPDM terpolymer (EPDM) are 1,4-hexadiene, dicyclopentadiene, 5 - ethylidene - 2 - norbornene, 5 - methylene - 2 - norbornene, 5 - propenyl - 2 - norbornene and methyl tetrahydroindene. A typical EPDM is Vistalon 2504 (Exxon Chemical Co.) a terpolymer having a Mooney viscosity (ML, 1 + 8, 100°C) of 40 and having 50 wt.% of ethylene, 45 wt.% of propylene, and 5.0 wt.% of 5 - ethylidene - 2 - norbornene with an $\overline{M}n$ of 47,000, an $\overline{M}v$ of 145,000 and an $\overline{M}w$ of 174,000. ("Vistalon" is a registered Trade Mark at least in the United Kingdom).

Another EPDM terpolymer, Vistalon 2504—20 is derived from Vistalon 2504 (Exxon Chemical Co.) by a controlled extrusion process, wherein the resultant Mooney viscosity at 100°C is 20. The $\overline{M}n$ of Vistalon 2504—20 is 26,000, the $\overline{M}v$ is 90,000 and the $\overline{M}w$ is 125,000.

Nordel 1320 (DuPont) is another EPDM terpolymer having a Mooney viscosity at 100°C of 25 and having 53 wt.% of ethylene, 3.5 wt.% of 1,4-hexadiene and 43.5 wt.% of propylene. ("Nordel" is a registered Trade Mark at least in the United Kingdom).

The olefinically unsaturated polymer is preferably dissolved in a suitable non-reactive solvent at a concentration level of 2 to 25 wt.%, more preferably at 5 to 20 wt.% and most preferably at 10 to 15 wt.%. Suitable solvents for sulfonation are selected from chlorinated aliphatic hydrocarbons such as 1,2-dichloroethane, halogenated aromatic hydrocarbons such as chlorobenzene, alicyclic hydrocarbons such as cyclohexane or aliphatic hydrocarbons having 4 to 7 preferably 5 to 6 carbon atoms per molecule such as isomeric pentanes and hexanes and mixtures thereof. In terms of an economical process halogenated solvents are less preferred as well as solvents boiling above 80°C. Preferred solvents are hydrocarbons boiling at or below 80°C such as hexane and cyclohexane. The most preferred solvents are the saturated aliphatic hydrocarbons containing from 4 to 6 carbon atoms per molecule and mixtures thereof. The olefinically unsaturated polymer dissolved in the solvent is sulfonated with a sulfonating agent for example an acyl sulfate, or a sulfur trioxide donor complexed with a Lewis base containing oxygen sulfur or phosphorus. The term "sulfur trioxide donor" as used in the specification means a compound containing available sulfur trioxide. Illustrative of such sulfur trioxide donors are $SO_3$, chlorosulfonic acid, and fluorosulfonic acid. The term "complexing agent" as used in the specification means a Lewis base, wherein Lewis base is an electron pair donor.

Illustrative of Lewis bases suitable for use as complexing agents are certain phosphorus compounds. While the phosphorus compound may be either inorganic or organic, it is preferred that the phosphorus compound be an organic compound. Various organic phosphites, phosphinites, phosphinates, phosphates, phosphonates, phosphonites and phosphines may be used as the complexing agent. The organic substituents consist of $C_1$ to $C_{10}$ alkyl, aryl, alkaryl, or aralkyl groups.

The nitrogen containing Lewis bases form highly stable complexes with sulfur trioxide donors and are not considered suitable for sulfonation of the unsaturated polymers of this invention.

Other Lewis bases suitable as complexing agents are those Lewis bases which contain oxygen or sulfur. Ethers and thioethers have been found useful for complexing sulfur trioxide donor to moderate reaction with the unsaturation of polymer molecules. The ethers and thioethers may contain one, two or more ether oxygens or sulfurs and may be linear or cyclic.

Illustrative of suitable ether Lewis bases are tetrahydrofuran, p-dioxane, 2,3 - dichloro - 1,4 - dioxane, m-dioxane, 2,4 - dimethyl - 1,3 - dioxane, 2 - phenyl - 1,3 - dioxane, diethyl ether, trioxane, and bis(2-chloroethyl)-ether. The preferred oxygen containing bases are p-dioxane, tetrahydrofuran and bis-(2-chloroethyl) ether. Illustrative of the thioethers are diethyl sulfide and tetrahydrothiophene.

Other oxygen containing Lewis bases suitable as complexing agents are carboxylic acid esters wherein the carboxylic acid is a $C_1$ to $C_{10}$ aliphatic acid, benzoic acid, or phenylacetic acid. Illustrative of such esters are benzyl acetate, butyl acetate, butyl propionate, methyl benzoate, p-nitrophenyl acetate, ethyl-n-butyrate and ethyl phenyl acetate.

The molar ratio of $SO_3$ donor to complexing agent may be as high as 15 to 1; preferably less than about 9:1; more preferably about 4:1 to about 1:1, e.g. 2:1.

The preferred solvents for preparation of the complexes of sulfur trioxide donor with complexing agents containing oxygen or sulfur are chlorinated hydrocarbons. Illustrative of such chlorinated solvents are carbon tetrachloride, dichloroethane, chloroform, and methylene chloride. The complexes may also be prepared by direct addition of reagents, if precautions are taken to dissipate evolved heat.

The reactions of ethereal complexes of $SO_3$ with the unsaturation of polymer chains has been found to be nonquantitative. Therefore, the use of excess complex is required to give the desired level of sulfonation.

The preferred sulfonating agents are the acyl sulfates, for example propionyl, butyryl, or benzoyl sulfate and in particular acetyl sulfate. The acyl sulfate may be produced by reacting concentrated sulfuric acid with an acid anhydride. For example, acetic anhydride may be reacted with sulfuric acid to form acetyl sulfate which may be used to sulfonate the polymers used in the process of this invention. If desired, acetic anhydride may be added to a solution of the polymer in a suitable solvent and sulfuric acid subsequently added to form acetyl sulfate in situ. Alternatively, sulfur trioxide may be reacted with acetic acid to form the acetyl sulfate.

The preferred sulfonating agent is acetyl sulfate which can be prepared according to the following equations:

$$R{-}COOH + SO_3 \rightarrow R{-}COO{-}SO_3H$$
$$(R{-}CO)_2O + H_2SO_4 \rightarrow R{-}COO{-}SO_3H + R{-}COOH$$
$$R{-}CO{-}X + H_2SO_4 \rightarrow RCOO{-}SO_3H + H{-}X$$
$$R{-}COOH + ClSO_3H \rightarrow R{-}COO{-}SO_3H + HCl$$
$$R{-}COONa + ClSO_3H \rightarrow R{-}COO{-}SO_3H + NaCl$$
$$(RCO)_2O + ClSO_3H \rightarrow R{-}COO{-}SO_3H + RCOCl$$

Sulfonation of the polymer is preferably conducted at a temperature between −10°C and +100°C, wherein the reaction time is 1 to 60 minutes, more preferably 5 to 45 minutes and more preferably 15 to 30 minutes.

The sulfonation of less substituted olefinic structures, such as those derived from 1,4-hexadiene terpolymers requires somewhat higher temperatures, e.g. 50°C when unsaturation levels are low, e.g. less than 2 mole%. More highly substituted olefinic structures, such as that derived from 5-ethylidene-2-norbornene, are rapidly sulfonated at room temperature and below even at low levels of unsaturation. The product remains soluble throughout the reaction. It should be pointed out that neither the sulfonating agent nor the manner of sulfonation is critical, provided that the sulfonating method does not degrade or cross-link the polymer backbone.

The amount of desirable sulfonation depends on the particular application. The elastomeric polymer is sulfonated at 10 to 50 meq. sulfonate groups/100 grams of polymer, preferably at about 15 to 50 meq. sulfonate group/100 grams of polymer and more preferably at 20 to 40 meq. sulfonate group/100 grams of polymer. The meq. of sulfonate group/100 grams of polymer is determined by dissolving the sulfonated polymer in a mixed solvent of 95 parts by volume of toluene and 5 parts by volume of methanol at a concentration level of 50 grams per liter of solvent. The sulfonated polymer is titrated with sodium hydroxide in ethanol to an Alizarin-Thymolphthalein end point. Sulfonate levels can also be determined from sulfur content which is obtained by Dietert Analysis.

Polymers containing unsaturation and sulfonate groups have been found to be somewhat deficient in thermostability. Therefore, it is necessary to neutralize a substantial portion of the sulfonate groups as part of the process for the manufacture of the sulfonated elastomeric polymer. Neutralization further improves the physical properties of the sulfonated polymer.

In preparing the ionomer it is desirable to neutralize essentially every sulfonate group. In the present invention, neutralizing agent is added in sufficient excess to ensure the neutralization of all the sulfonate groups.

When the molecular weight of the elastomeric polymer or the concentration of the elastomeric polymer in the non-reactive solvent is too high or when the sulfonate content of the elastomeric polymer is high, gelation can occur due to the ionic interactions between the sulfonate groups during sulfonation or between the metal sulfonate groups after neutralization. The ionic associations of the sulfonate groups are dissipated by ionic group plasticizers such as polar hydrocarbons.

Neutralization of the sulphonic acid groups can be effected through zinc salts of carboxylic acids having 1 to 4 carbon atoms per molecule, in particular zinc acetate dissolved in water. However, extremely high cement viscosities or gels can develop due to the effects of the water added during neutralization thereby producing neutralized sulfonated elastomeric cements which cannot be stirred, pumped, poured or otherwise easily handled. Since it is necessary to convert the unneutralized

sulfonate group to the zinc sulfonate, it is necessary that these neutralizing agents be soluble in a solvent, even if that solvent is not miscible with the sulfonation cement. A large class of possible metal neutralizing agents which might be suitable for this invention are not sufficiently soluble in any organic type solvent. The only effective, available, inexpensive and easy to handle solvent is water. As a consequence, the problem of high viscosity or gelation during the neutralization of sulfonation cements can only be overcome by lowering the amount of water present in the neutralization system. The only effective manner in which this can be done is to choose a neutralization agent such as zinc acetate which has a sufficiently high degree of solubility in a polar organic solvent such as methanol.

If the sulfonation cement at the end of the sulfonation is neutralized with an aqueous solution of the zinc acetate in the absence of a polar solvent severe gelation occurs. This gelation is not due to covalent crosslinking but due to the ionic associations between the metal sulfonated groups. This gelation can be eliminated by using a solution of the zince acetate dissolved in methanol; however, in order to have an economical process, it is necessary to keep the methanol concentration below 10 volume % of the non-reactive solvent, preferably less than 8 volume%, and more preferably less than 5 volume%. When the methanol concentration is below 5 volume% it is preferred not to recycle the methanol but to discharge the methanol into a biological pond for disintegration of the methanol. When higher levels of zinc acetate are required as a neutralizing agent, it is not possible to dissolve fully the required amount of zince acetate in pure methanol, wherein the methanol level is maintained at a concentration of less than 10 volume% of the non-reactive solvent and even becomes more difficult in the most preferred embodiment wherein the volume% of methanol is less than 5. The minimum volume% of methanol based on the volume of non-reactive solvent is at least 2, preferably 2.5; and more preferably 3. When water is employed, the volume% of water in the mixed solvent of water and methanol is less than 25; preferably less than 20 and more preferably less than 15. The concentration of zinc acetate dihydrate agent in the solvent system which can be either methanol alone or a mixture of water and methanol system, is 5 to 35 grams per 100 ml. of solvent; preferably 10 to 30: and more preferably15 to 25.

At the higher methanol concentrations, the neutralized cement viscosities are the lowest and the most desirable; however, it is desirable to keep the methanol concentrations low in order to prevent polymer precipitation and to facilitate the separation of solvent from methanol after the solvent is evaporated from the polymer in the steam stripping operation.

The amount of water is kept at a minimum and is generally dictated not only by the solubility of the neutralizing agent but also the concentration of the base polymer, the concentration of the sulfonic acid groups, and the desired ratio of metal ion to sulfonic acid groups in the neutralized cement. Water concentration of 3.5 volume% or less based on the volume of the non-reactive solvent, more preferably less than 2.5 volume% and preferably less than 1.5 volume is effective in producing cements with sufficiently low viscosities. The viscosities of the neutralized cements are considered processable, when the room temperature (25°C) Brookfield viscosities are less than 50 Pa.s [50,000 centipoise (cps)] at 0.6 rpm, preferably less than 20 Pa.s (20,000 cps) and most preferably 1 to 10 Pa.s (1000 to 10,000 cps).

It should be apparent to those skilled in the art that those neutralized cements having viscosities of 20 Pa.s to 50 Pa.s (20,000 to 50,000 cps) are not as readily processed at ambient temperatures. It is usually observed, however, that increasing the temperature of the cement by 10 to 25°C above room temperature is effective in lowering the cement viscosity to a more desirable lower range below 50 Pa.s (50,000 cps). Therefore, it is within the spirit of this invention to include those cements whose viscosities at room temperature are above 50 Pa.s (50,000 cps) but which can be lowered to below 50 Pa.s (50,000 cps) by increasing the temperature to no more than 35°C.

To the neutralized cement of the sulfonated elastomeric polymer can optionally be added a linear, saturated organic acid having 10 to 40 carbon atoms, more preferably 12 to 26 carbon atoms, and most preferably 14 to 20 carbon atoms. The most preferred acid is stearic acid, wherein the fatty acid reacts with excess zinc carboxylate to form the zinc salt of the fatty acid which is a preferential plasticizer for the zinc neutralized sulfonate groups of the sulfonated elastomeric polymer. Sufficient organic acid is added to form less than 35 parts per hundred by weight of the zinc salt of the organic acid based on 100 parts of the neutralized sulfonated elastomeric polymer; preferably less than 30 and more preferably 8 to 30.

The order of addition of the zinc stearate dissolved in the solvent system and the stearic acid is critical. If stearic acid is first added to the sulfonated cement prior to the addition of the zinc acetate in the solvent system, the stearic acid reacts with the methanol to form methyl stearate. The formation of methyl stearate has an adverse effect on both the tensile properties and the rheological properties. The formation of methyl stearate can be eliminated and the formation of zinc stearate can be maximized by practicing the teachings of the invention, that is, by first adding the zinc acetate to the sulfonated cement followed by the subsequent addition of the stearic acid thereby forming the preferred preferential plasticizer, zinc stearate, in situ.

The metal neutralized sulfonated elastomeric polymer prepared according to this present invention, can be isolated as a crumb by steam stripping. No surface active agents are needed to prepare the easy handling crumb. The crumb that is obtained is easily washed to remove water soluble

impurities such as acetic acid and methanol and is suitable to be fed into a dewatering extruder or to be dried in a fluid bed dryer.

The resultant zinc neutralized sulfonated elastomeric polymers have higher incorporation levels of zinc, namely 80—90% expressed as zinc stearate as compared to the incorporation levels of 65—70% expressed as zinc stearate based on the weight of zinc neutralized sulphonated polymer, if isopropanol was employed in place of the methanol. This is due to the more facile formation of the zinc stearate from zinc acetate and stearic acid in methanol as compared to isopropanol. The zinc stearate formation in isopropanol is both slow and low in yield whereas in methanol its formation is fast and high in yield. Consequently, less zinc acetate must be used in the methanol process. The physical properties such as tensile strength and compression set are uniformly high for the zinc neutralized sulfonated elastomeric polymer prepared according to the methanol process as compared to an isopropanol process. This enhancement in physical properties is theorized to be probably attributable to the formation of high concentrations of zinc stearate in situ and consequently lower concentrations of stearic acid, when one employs the methanol process.

The higher conversion of stearic acid to zinc stearate when methanol is used permits the use of lower quantities of zinc acetate which further permits the use of less methanol, thereby making the process more economical, or less water, thereby producing cements which are lower in viscosity and more readily processable.

*Solubility Test*

The solubility characteristics of zinc acetate dihydrate in methanol-water mixtures were determined. Ten grams of $Zn(OOCCH_3)_2.2H_2O$ was placed into an Erlenmeyer flask and a given amount of methanol was added. The contents were stirred with a magnetic stirring bar. When solution did not occur water was added incrementally until solution occurred. The solubility of zinc acetate dihydrate is illustrated in the Figure where the relative amounts of methanol and water required to dissolve 1.0 gram of the salt are plotted against each other. The solubility of zinc acetate dihydrate in methanol on the one hand and water on the other is substantially different. However, as the Figure shows a relatively small amount of water greatly enhances the solubility of zinc acetate dihydrate in methanol. Almost 15.5 ml. of pure methanol is required to dissolve 1.0 g of the salt whereas only about 4.0 ml of methanol is required when an additional 0.3 ml. of water is used.

The ability of small amounts of water to markedly enhance the solubility of zinc acetate in methanol thereby provides for an economical manufacturing process for zinc sulfonate containing EPDM. It is necessary that the zinc acetate neutralizing agent be added as a solution in order to effect neutralization and in most instances the zinc acetate required for this neutralization and for other purposes is not soluble in a sufficiently small amount of methanol to be economical. In addition a large amount of methanol will render the polymer insoluble by virtue of its incompatibility with the hydrocarbon backbone rather than through any changes in ionic association. The zinc acetate requirements for neutralization of 100 grams of sulfonated polymer in 1000 ml. non-reactive solvent for practically all of the desirable gum compositions cover a range of zinc acetate levels requiring from about 100 ml. to about 250 ml. methanol, or from about 10 to about 25 volume% methanol based on non-reactive solvent. These levels of methanol increase the cost of the manufacturing process and can result in polymer precipitation. Consequently, these higher alcohol levels are undesirable. They are readily avoided through the use of small amounts of water.

Example 1

Vistalon 2504 (Exxon Chemical Co.) was decreased in molecular weight through a hot extrusion process from its original Mooney viscosity (ML, 1 + 8, 100°C) of about 40 to a Mooney viscosity of about 20. Vistalon 2504 contains about 50 wt.% ethylene, about 45 wt.% propylene and about 5 wt.% 5-ethylidene-2-norbornene.

In 5000 ml. of hexane was dissolved 500 g of the 20 Mooney EPDM. To the cement was added 28.7 ml. of acetic anhydride (304 mmoles) followed by 10.5 ml. of concentrated sulfuric acid (187.5 mmoles). After 30 minutes the sulfonated cement was neutralized and simultaneously deactivated through the addition of a solution of 33.0 g zinc acetate dihydrate (300 meq.) in 250 ml. methanol and 10 ml. water. The methanol was 5 volume% on hexane, and the water was 0.2 volume% on hexane. The Brookfield viscosity of the resultant cement was then obtained at room temperature over a range of shear rates. Viscosity data are given in Table I.

The resultant cement was low in viscosity and could easily be stirred, poured, or pumped.

TABLE I
BROOKFIELD VISCOSITY OF UNPLASTICIZED, NEUTRALIZED SULFONATED EPDM CEMENT

25°C, Spindle 3

| rpm | Viscosity, Pa.s × $10^{-3}$ (cps) |
|---|---|
| 0.3 | 6000 |
| 0.6 | 3200 |
| 1.5 | 1920 |
| 3.0 | 1600 |
| 6.0 | 1700 |
| 12.0 | 1550 |
| 30.0 | 1400 |
| 60.0 | 1300 |

Example 2

Zinc sulfonate EPDM when formulated requires the presence of some ionic plasticizer in order to provide a sufficiently low melt viscosity for ready processability in operations such as injection molding and extrusion. Effective plasticizers are stearic acid and zinc stearate. Stearic acid can be added to the cement during the process of neutralization and either some of it or all of it can be converted to the more desirable zinc stearate through the proper control of zinc acetate concentration as well as the process conditions.

This series of runs will demonstrate that it is possible for undesirable methyl stearate to form under certain process conditions. In order to determine how extensive the methyl stearate formation was, the effect of reaction time was studied.

The 20 Mooney V-2504 (100 g) described in Example 1 was dissolved in 1000 ml. hexane and sulfonated with 5.74 ml. of acetic anhydride and 2.10 ml. concentrated sulfuric acid (37.5 mmoles). Samples for sulfur analysis were taken, and the polymeric sulfonic acid was isolated by steam stripping and drying on a rubber mill. The sulfonation mixture was inactivated with 30 ml. methanol. Then 25.6 g (90 mmoles) of stearic acid was added. In four separate runs (A—D, Table II) the reaction mixture was stirred for 15, 30, 60, and 120 minutes. The cements were then neutralized with a solution of 9.88g (90 meq.) of zinc acetate dihydrate in 50 ml. methanol and 2 ml. water. After stirring 30 minutes 0.5 g of Antioxidant 2246 was added, and the resultant plasticized and neutralized sulfonated EPDM was isolated through steam stripping and drying the wet polymer on a rubber mill at about 98°C. Data on these four runs are given in Table II.

Infra-red spectra on thin films of the above polymers were obtained. After only 15 minutes stearic acid contact time (A) a substantial amount of methyl stearate (carbonyl band at about 1745 $cm^{-1}$) had already formed. After 60 minutes (C) hardly any stearic acid was present, and after 120 minutes (D) virtually none was present but the methyl stearate content was substantial.

Two more sulfonations were made (E—F, Table II) as described above. However, in these two instances inactivation and neutralization were effected simultaneously after 30 minutes of sulfonation. Stearic acid (90 mmoles) was added along with 0.5 g Antioxidant 2246, and the resultant cements were stirred for 30 minutes (E) and for 24 hours (F). The polymers were isolated as described above. Data on these runs also are given in Table II.

Infra-red examination of these two samples showed only trace quantities of methyl stearate even after 24 hours of stirring. These runs show that no esterification is occurring after neutralization. This means that not only is methyl stearate not forming but also that methyl acetate is not forming. It is important in a successful process to avoid the formation of such by-products which might interfere with product performance and which could increase the complexity and the cost of the manufacturing process.

TABLE II

ESTER FORMATION DURING SULFONATION INACTIVATION

| Run | A | B | C | D | E | F |
|---|---|---|---|---|---|---|
| Inactivation First | Yes | Yes | Yes | Yes | No | No |
| Methanol, ml. | 30 | 30 | 30 | 30 | 0 | 0 |
| Time Between Stearic Acid Addition and Isolation, Hours | 0.25 | 0.50 | 1.0 | 2.0 | 0.50 | 24 |
| Neutralization | | | | | | |
| $Zn(OOCCH_3)_2.2H_2O$, meq. | 90 | 90 | 90 | 90 | 90 | 90 |
| Methanol, ml. | 50 | 50 | 50 | 50 | 80 | 80 |
| Water, ml. | 2 | 2 | 2 | 2 | 2 | 2 |
| Product Properties | | | | | | |
| Sulfonate Content, meq./100 EPDM | 36.6 | 34.0 | 36.0 | 36.6 | 34.7 | 34.0 |
| At 25°C | | | | | | |
| Tensile Strength $kg/cm^2$ | 137 | — | — | 127 | 195 | — |
| 300% Modulus $kg/cm^2$ | 25 | — | — | 30 | 32 | — |
| Elongation, % | 665 | — | — | 625 | 630 | — |

Example 3

A series of fourteen runs was made to demonstrate the effects of methanol and water concentration on the viscosity of the cement of the neutralized and stearic acid plasticized sulfonated EPDM.

The 20 Mooney Vistalon 2504 of Example 1 was sulfonated as described in Example 2. After 30 minutes of sulfonation the cement was inactivated and neutralized with a solution of zinc acetate dihydrate in the mixtures of methanol and water shown in Table III. Samples for sulfur analysis were withdrawn just prior to neutralization. After 5 minutes 90 mmoles of stearic acid was added along with 0.5 g Antioxidant 2246, and the cement was stirred for 30 minutes. The product was then isolated immediately by steam stripping, and the polymer was water washed in a Waring blender. The resultant wet crumb was dried on a two-roll mill at about 104°C.

Brookfield viscosities of the final cements were determined at room temperature over a range of shear rates. Viscosities are given in Table III. These data clearly show the dramatic effects of methanol and water concentration upon cement viscosity. At a level of 4 volume % methanol on hexane only about 1 volume% water produced a viscosity of greater than 37 Pa.s (37,000 cps) at 0.6 rpm. Thus at very low levels of methanol it is critical to keep the water level very low in order to obtain cement viscosities which are low enough for the cements to be easily processed. Increasing the amount of methanol decreases the cement viscosity and allows more water to be used, if desired.

It is, of course, most desirable to keep the methanol concentration low. However, in order to dissolve the zinc acetate dihydrate at low methanol levels it is necessary to use some water to dissolve the zinc acetate. The use of too much water and too little methanol results in cement viscosities which are too high. Suitable balances can be obtained which give low cement viscosities, complete zinc acetate solubilities, and low methanol concentrations.

The sulfur and zinc contents of the fourteen gums are given in Table IV. Within experimental error the sulfur contents and zinc contents were identical and did not change with changing concentrations of methanol and water used in the process.

Melt viscosities of selected gums were obtained with an Instron capillary rheometer at 200°C and over a range of shear rates. (The word "Instron" is a registered Trade Mark at least in the United Kingdom). Apparent viscosities for three shear rates are given in Table IV as well as the shear rate at which melt fracture occurred. Again within experimental error the gums produced possessed identical properties. Thus over the range of methanol and water levels studied product compositions and product properties were identical.

TABLE III

BROOKFIELD VISCOSITIES OF NEUTRALIZED CEMENTS

| Run | A | B | C | D | E | F | G | H | I | J | K | L | M | N |
|---|---|---|---|---|---|---|---|---|---|---|---|---|---|---|
| Methanol, ml. | 40 | 40 | 40 | 60 | 60 | 60 | 60 | 80 | 80 | 80 | 80 | 100 | 100 | 100 |
| Water, ml. | 3 | 6 | 11 | 3 | 6 | 11 | 15 | 2 | 3 | 6 | 11 | 1 | 3 | 6 |
| Brookfield Viscosity, Pa.s × $10^{-3}$ (cps) | | | | | | | | | | | | | | |
| RPM | | | | | | | | | | | | | | |
| 0.3 | 19200 | 12000 | 58400 | 12000 | 33600 | 18800 | 38000 | 16800 | 12800 | 17200 | 20400 | 11600 | 16800 | 18000 |
| 0.6 | 10400 | 10400 | 37200 | 7600 | 19000 | 17200 | 30400 | 12600 | 9200 | 10000 | 12000 | 6800 | 10800 | 14800 |
| 1.5 | 8000 | 7040 | 36400 | 4880 | 8720 | 13040 | 22400 | 7200 | 6560 | 7280 | 7760 | 5040 | 7120 | 8880 |
| 3.0 | 6800 | 6760 | 32720 | 4240 | 6560 | 11280 | 18400 | 6280 | 4400 | 6920 | 6800 | 4360 | 5120 | 6920 |
| 6.0 | 5680 | 6680 | off scale | 3700 | 5280 | 10380 | 16800 | 4700 | 3580 | 5120 | 6800 | 3800 | 4420 | 5680 |
| 12.0 | 4840 | 5950 | off scale | 3490 | 5150 | 8960 | off scale | 3960 | 3020 | 5610 | 6550 | 3910 | 3550 | 4620 |
| 30.0 | off scale | off scale | off scale | 3080 | off scale | off scale | off scale | 3456 | 2420 | off scale | off scale | 3360 | 3176 | off scale |

TABLE IV

| Run | Weight %, S | Weight %, Zn | Apparent Viscosity at 200°C, Pa.s x $10^{-6}$ Poise x $10^{-5}$) 0.73 $sec^{-1}$ | 7.3 $sec^{-1}$ | 73 $sec^{-1}$ | Melt Fracture Shear Rate |
|---|---|---|---|---|---|---|
| A | 1.04 | 1.81 | 3.3 | 1.2 | 0.3 | 2911 |
| B | 1.04 | 1.89 | — | — | — | — |
| C | 1.01 | 2.03 | — | — | — | — |
| D | 1.01 | 1.93 | 4.2 | 1.4 | 0.3 | 2911 |
| E | 1.05 | 1.98 | 2.9 | 1.1 | 0.3 | 2911 |
| F | 1.09 | 2.01 | 3.7 | 1.3 | 0.3 | 2911 |
| G | 1.02 | 2.00 | 3.3 | 1.2 | 0.3 | 2911 |
| H | 1.03 | 1.92 | — | — | — | — |
| I | 1.02 | 1.76 | 3.3 | 1.2 | 0.3 | 2911 |
| J | — | 1.90 | — | — | — | — |
| K | 1.04 | 1.83 | — | — | — | — |
| L | 1.04 | 2.00 | — | — | — | — |
| M | 1.01 | 1.89 | 2.9 | 1.1 | 0.3 | 2911 |
| N | 1.11 | 1.90 | — | — | — | — |

Example 4

Stearic acid is an ionic plasitcizer for zinc sulfonate EPDM. It markedly improves melt flow; however, tensile properties, especially those at somewhat elevated temperatures, deteriorate or are not improved. Zinc stearate on the other hand exerts about the same effect on melt flow as does stearic acid; however, zinc stearate rather remarkably improves tensile properties at both room temperature and at 70°C.

Virtually all formulations derived from zinc sulfonate EPDM do require some sort of an ionic plasticizer, and zinc stearate is the plasticizer of choice, It is possible to prepare the unplasticized gum and post add the zinc stearate but the unplasticized gum has a high viscosity and it is difficult to mix. Also the wet crumb of unplasticized gum after manufacture and isolation cannot be dried by such commonly used techniques as extrusion dewatering. It is desirable to have zinc stearate in the gum prior to isolation, drying and compounding.

Of course, zinc stearate can be added to the neutralized cement prior to isolation. This requires a dispersion step. In addition zinc stearate is costly.

It is possible to generate zinc stearate more economically during the neutralization step through the addition of stearic acid and a sufficient excess of zinc acetate neutralizing agent. Thus through the simple adjustment of zinc acetate concentration it is possible to prepare zinc stearate plasticized gums which possess sufficiently low melt viscosity for ease of compounding and exceptional physical properties. It has been found that surprisingly the use of methanol as a cosolvent improves both the rate of formation and the yield of zinc stearate over isopropanol. In a practical sense this means that less zinc acetate needs to be used for the combination of neutralization and zinc stearate formation. In terms of the process wherein methanol is used this means that either less methanol can be used to make the process even more economical or that less water is necessary to dissolve the zinc acetate resulting in lower cement viscosities.

In this example two series of runs were made using methanol as a neutralization cosolvent and isopropanol as a neutralization cosolvent. Twelve runs were made in each series wherein both the amount of stearic acid plasticizer and the amount of zinc stearate neutralizing agent were varied. These variations are shown in Table V.

All sulfonations were made on 100 g of the 20 Mooney Vistalon 2504 described in Example 1 in

1000 ml. hexane with in situ acetyl sulfate generated through the addition of 60.75 mmoles acetic anhydride followed by 37.5 mmoles of concentrated sulfuric acid for 30 minutes at room temperature.

In the methanol process termination and neutralization were effected simultaneously by adding a solution of zinc acetate in 80 ml. methanol and 3 ml. water. The stearic acid was added along with 0.5 g Antioxidant 2246, and the neutralized mixture was stirred for 2 hours before steam stripping and work-up.

In the isopropanol process the sulfonation was terminated with 150 ml. isopropanol followed by a solution of zinc acetate in 25 ml. water. The stearic acid was added with 0.5 g Antioxidant 2246, and the cement was stirred for 2 hours before stripping and work-up.

After stripping the gums were pulverised with water in a Waring blender, and the resultant crumbs were dewatered and dried on a rubber mill at about 110°C.

The sulfur and zinc contents were determined and are given in Table V. Infra-red spectra on thin films of the gums were obtained. The completeness of the conversion of stearic acid to zinc stearate was followed with the stearic acid carbonyl band at 1710 $cm^{-1}$.

The infra-red spectra showed that about 30 meq. of zinc acetate/100 EPDM less than in the isopropanol process was required in the methanol process to produce an equivalent amount of zinc stearate. The effect was also manifested in the zinc contents of the gums. The zinc contents of the methanol process gums are uniformly higher than those of the isopropanol process.

The real significance of the efficient production of zinc stearate is demonstrated in Table VI where the tensile properties at room temperature and 70°C and the melt index of all of the gums are tabulated. The melt indexes of the methanol and isopropanol gums are comparable which is to say that stearic acid and zinc stearate are excellent but equivalent ionic plasticizers. Substantial differences in tensile properties of the methanol gums and the isopropanol gums are obtained. These differences are due simply to the relative amounts of stearic acid present. Zinc stearate markedly enhances tensile properties while stearic acid is deleterious to tensile properties, especially at 70°C.

TABLE V

| Run No. | Alcohol | $Zn(OAc)_2.2H_2O$/ 100 EPDM | | Stearic Acid/ 100 EPDM | | Free Polymeric Sulfonic Acid | | Neutralized Gum | | | Stearic Acid Carbonyl Peak at 1710 $cm^{-1}$ in Infra-red |
|---|---|---|---|---|---|---|---|---|---|---|---|
| | | | | | | | $SO_3H$ Content | | Zinc Content | | |
| | | Meq. | Weight, g. | Mmoles | Weight, g. | Sulfur, Wt. % | Meq./ 100 EPDM | Sulfur, Wt. % | Wt. % | Meq./ 100 EPDM | |
| A–1 | MEOH | 60 | 6.59 | 30 | 8.53 | 0.95 | 30.4 | 1.01 | 1.59 | 54 | Small |
| B–1 | MEOH | 90 | 9.88 | 30 | 8.53 | 1.045 | 33.6 | 0.96 | 2.34 | 80 | Nil |
| C–1 | MEOH | 120 | 13.17 | 30 | 8.53 | 1.09 | 35.1 | 1.02 | 3.00 | 103 | Nil |
| D–1 | MEOH | 150 | 16.46 | 30 | 8.53 | 1.015 | 32.5 | 0.96 | 3.40 | 117 | Nil |
| E–1 | MEOH | 60 | 6.59 | 60 | 17.07 | 1.005 | 32.2 | 0.90 | 1.46 | 54 | Medium |
| F–1 | MEOH | 90 | 9.88 | 60 | 17.07 | 1.105 | 35.5 | 0.94 | 2.12 | 78 | Small |
| G–1 | MEOH | 120 | 13.17 | 60 | 17.07 | 1.07 | 34.3 | 0.90 | 2.75 | 102 | Nil |
| H–1 | MEOH | 150 | 16.46 | 60 | 17.07 | 1.12 | 36.0 | 0.98 | 3.39 | 126 | Nil |
| I–1 | MEOH | 60 | 6.59 | 90 | 25.60 | 1.13 | 36.3 | 0.83 | 1.28 | 51 | Large |
| J–1 | MEOH | 90 | 9.88 | 90 | 25.60 | 1.075 | 34.5 | 0.85 | 1.73 | 69 | Medium |
| K–1 | MEOH | 120 | 13.17 | 90 | 25.60 | 1.075 | 34.5 | 0.82 | 2.60 | 103 | Small |
| L–1 | MEOH | 150 | 16.46 | 90 | 25.60 | 1.005 | 32.2 | 0.85 | 4.12 | 163 | Trace |
| A–2 | IPOH | 60 | 6.59 | 30 | 8.53 | 1.005 | 32.2 | 1.01 | 1.35 | 46 | Small |
| B–2 | IPOH | 90 | 9.88 | 30 | 8.53 | 1.045 | 33.6 | 0.95 | 1.95 | 67 | Nil |
| C–2 | IPOH | 120 | 13.17 | 30 | 8.53 | 0.995 | 31.9 | 1.02 | 1.94 | 66 | Nil |
| D–2 | IPOH | 150 | 16.46 | 30 | 8.53 | 1.075 | 34.5 | 0.96 | 2.99 | 103 | Nil |
| E–2 | IPOH | 60 | 6.59 | 60 | 17.07 | 1.025 | 32.8 | 0.90 | 1.09 | 40 | Large |
| F–2 | IPOH | 90 | 9.88 | 60 | 17.07 | 1.045 | 33.6 | 0.93 | 1.69 | 62 | Large |
| G–2 | IPOH | 120 | 13.17 | 60 | 17.07 | 1.04 | 33.4 | 0.90 | 2.00 | 74 | Medium |
| H–2 | IPOH | 150 | 16.46 | 60 | 17.07 | 0.98 | 31.4 | 0.94 | 2.38 | 88 | V. Small |
| I–2 | IPOH | 60 | 6.59 | 90 | 25.60 | 1.065 | 34.2 | 0.81 | 0.77 | 30 | Large |
| J–2 | IPOH | 90 | 9.38 | 90 | 25.60 | 1.065 | 34.2 | 0.81 | 1.62 | 64 | Large |
| K–2 | IPOH | 120 | 13.17 | 90 | 25.60 | 1.045 | 33.6 | 0.77 | 2.76 | 109 | Medium |
| L–2 | IPOH | 150 | 16.46 | 90 | 25.60 | 1.065 | 34.2 | 0.88 | 2.58 | 102 | Small |

TABLE VI

| Run No. | Process | Zinc Acetate meq./Stearic Acid mmoles* | Room Temperature 300% Modulus, psi | Room Temperature 300% Modulus, kg/cm² | Room Temperature Tensile Strength, psi | Room Temperature Tensile Strength, kg/cm² | Room Temperature Elong, % | 70°C 300% Modulus, psi | 70°C 300% Modulus, kg/cm² | 70°C Tensile Strength, psi | 70°C Tensile Strength, kg/cm² | 70°C Elong, % | Melt Index [(190°C, 250 psi) (17.6 kg/cm²)] g/10 min. |
|---|---|---|---|---|---|---|---|---|---|---|---|---|---|
| A–1 | MEOH | 60/30 | 570 | 40 | 1020 | 71 | 490 | 110 | 8 | 105 | 7 | 400 | 0.13 |
| B–1 | MEOH | 90/30 | 1000 | 70 | 3350 | 236 | 510 | 330 | 23 | 490 | 34 | 480 | 0.26 |
| C–1 | MEOH | 120/30 | 1320 | 93 | 3350 | 236 | 490 | 260 | 18 | 350 | 25 | 440 | 0.44 |
| D–1 | MEOH | 150/30 | 1070 | 75 | 3510 | 247 | 500 | 230 | 16 | 410 | 29 | 540 | 0.66 |
| E–1 | MEOH | 60/60 | 500 | 35 | 1360 | 95 | 560 | 60 | 4 | 50 | 4 | 800+ | 0.69 |
| F–1 | MEOH | 90/60 | 550 | 39 | 2040 | 143 | 570 | 120 | 8 | 250 | 15 | 900 | 0.48 |
| G–1 | MEOH | 120/60 | 1150 | 81 | 3810 | 268 | 500 | 290 | 20 | 720 | 50 | 670 | 0.85 |
| H–1 | MEOH | 150/60 | 1140 | 80 | 3730 | 262 | 510 | 340 | 24 | 550 | 39 | 460 | 1.01 |
| I–1 | MEOH | 60/90 | 490 | 34 | 1630 | 114 | 590 | 30 | 2 | 10 | 1 | 800+ | 2.76 |
| J–1 | MEOH | 90/90 | 510 | 36 | 2070 | 145 | 610 | 55 | 4 | 50 | 4 | 800+ | 2.10 |
| K–1 | MEOH | 120/90 | 550 | 39 | 2430 | 170 | 610 | 110 | 8 | 210 | 15 | 800+ | 1.33 |
| L–1 | MEOH | 150/90 | 970 | 68 | 4565 | 321 | 550 | 220 | 15 | 580 | 41 | 760 | 1.82 |
| A–2 | IPOH | 60/30 | 685 | 48 | 1650 | 116 | 500 | 100 | 7 | 110 | 8 | 540 | 0.15 |
| B–2 | IPOH | 90/30 | 1000 | 70 | 2970 | 208 | 480 | 245 | 17 | 370 | 26 | 520 | 0.16 |
| C–2 | IPOH | 120/30 | 1000 | 70 | 2675 | 187 | 480 | 255 | 18 | 350 | 25 | 470 | 0.25 |
| D–2 | IPOH | 150/30 | 1430 | 100 | 3560 | 250 | 460 | 300 | 21 | 530 | 37 | 510 | 0.46 |
| E–2 | IPOH | 60/60 | 540 | 38 | 1375 | 96 | 530 | 40 | 3 | 30 | 2 | 800+ | 0.74 |
| F–2 | IPOH | 90/60 | 500 | 35 | 1880 | 132 | 580 | 80 | 6 | 90 | 6 | 800+ | 0.58 |
| G–2 | IPOH | 120/60 | 490 | 34 | 2040 | 143 | 610 | 110 | 5 | 170 | 12 | 800+ | 0.66 |
| H–2 | IPOH | 150/60 | 620 | 44 | 3090 | 216 | 570 | 180 | 13 | 370 | 26 | 760 | 1.20 |
| I–2 | IPOH | 60/90 | 610 | 43 | 1650 | 116 | 540 | 20 | 1 | 10 | 1 | 800+ | 3.17 |
| J–2 | IPOH | 90/90 | 560 | 39 | 2330 | 164 | 610 | 40 | 3 | 30 | 2 | 800+ | 1.85 |
| K–2 | IPOH | 120/90 | 600 | 42 | 2300 | 162 | 580 | 80 | 6 | 100 | 7 | 800+ | 1.63 |
| L–2 | IPOH | 150/90 | 620 | 44 | 2700 | 190 | 270 | 120 | 8 | 210 | 15 | 800+ | 1.53 |

* Per 100 EPDM

## Claims

1. A process for preparing a cement of a zinc neutralised sulfonated polymer dissolved in a non-reactive solvent, said polymer being derived from an elastomer having olefinic unsaturation sites wherein the polymer has from 0.1 to 10.0 mole% olefinic unsaturation, said cement having a Brookfield viscosity at 0.6 rpm and at a temperature of from 25°C up to no more than 35°C of less than 50 Pa.s (50,000 cps), said sulfonated polymer having 10 to 50 meq. of sulfonate groups per 100 gm polymer and containing less than 5 wt% gel, which comprises neutralising said sulfonated polymer dissolved in said non-reactive solvent with excess zinc acetate dissolved in a solvent system consisting of methanol or a mixture of methanol and water to form said zinc neutralised sulfonated polymer wherein the volume% of methanol based on non-reactive solvent is at least 2 and less than 10, the volume% of water based on the mixed solvent of methanol and water is less than 25 and the concentration of zinc acetate dihydrate in the solvent system is 5 to 35 gm per 100 gm of solvent.

2. A process according to claim 1, wherein said non-reactive solvent is a halogenated aromatic hydrocarbon, a chlorinated aliphatic hydrocarbon, an aliphatic hydrocarbon having 4 to 7 carbon atoms per molecule or a mixture thereof.

3. A process according to either of claims 1 and 2 which includes addition of a linear, saturated, organic acid having 10 to 40 carbon atoms per molecule subsequent to said neutralisation with said zinc acetate, sufficient organic acid being added to form less than 35 parts by weight of zinc salt of the acid, based on 100 parts by weight of the neutralised sulphonated polymer, said excess zinc acetate reacting with said organic acid thereby forming a zinc salt of said organic acid *in situ*.

4. A process according to claim 3, wherein said carboxylic acid is stearic acid.

5. A process according to any one of the preceding claims, wherein said zinc neutralised sulfonated polymer is removed from the gel-free cement by steam stripping.

6. A process according to any one of the preceding claims, wherein said sulfonated polymer is formed from a hydrocarbon elastomeric polymer.

7. A process according to claim 6, wherein said hydrocarbon elastomeric polymer is a Butyl rubber or an EPDM terpolymer.

8. A composition comprising a cement of a zinc neutralised sulphonated butyl rubber dissolved in a non-reactive solvent, said cement having a Brookfield viscosity at 0.6 rpm and at a temperature of from 25° up to no more than 35°C of less than 50 Pa.s (50,000 cps) which comprises

(a) 100 parts by weight of sulphonated butyl rupper having from 0.1 to 10.0 mole% olefinic unsaturation, having a Mooney viscosity at 100°C of 20 or less and having 10 to 50 meq. sulphonate groups per 100 grams of said butyl rubber and containing less than 5 wt% gel; said sulphonate groups being completely neutralized with a zinc cation using a solvent system consisting of methanol or a mixture of methanol and water wherein the volume% of methanol based on non-reactive solvent is at least 2 and less than 10, and the volume% of water based on the mixed solvent of methanol and water is less than 25; and

(b) 8 to 30 parts by weight of a zinc salt of a $C_{10}$ to $C_{40}$ linear, saturated, organic acid per 100 parts of said sulphonated butyl rubber.

9. A composition according to claim 8 wherein said zinc salt of said organic acid is zinc stearate.

## Patentansprüche

1. Verfahren zur Herstellung eines Kitts aus einem zinkneutralisierten, sulfonierten, in einem nichtreaktiven Lösungsmittel gelösten Polymer, das sich von einem Elastomer mit olefinischen Ungesättigtheiten ableitet und 0,1 bis 10,0 Mol% olefinische Ungesättigtheiten aufweist, wobei der Kitt eine Brookfield-Viskosität bei 0,6 U/Min. und einer Temperatur von 25°C bis nicht mehr als 35°C von weniger als 50 Pa.s (50,000 cPs) besitzt und das sulfonierte Polymer 10 bis 50 milliäquivalente Sulfonatgruppen je 100 g Polymer aufweist und weniger als 5 Gew.% Gel enthält, bei welchem das sulfonierte, in dem nichtreaktiven Lösungsmittel gelöste Polymer mit überschüssigem Zinkacetat gelöst in einem Lösungsmittelsystem bestehend aus Methanol oder einer Mischung von Methanol und Wasser unter Bildung des zinkneutralisierten sulfonierten Polymers neutralisiert wird, wobei die Menge an Methanol bezogen auf das nichtreaktive Lösungsmittel mindestens 2 und weniger als 10 Volumenprozent, die Menge an Wasser bezogen auf das gemischte Lösungsmittel aus Methanol und Wasser weniger als 25 Volumenprozent und die Konzentration an Zinkacetat-Dihydrat in dem Lösungsmittelsystem 5 bis 35 g je 100 g Lösungsmittel betragen.

2. Verfahren nach Anspruch 1, dadurch gekennzeichnet, daß als nichtreaktives Lösungsmittel ein halogenierter aromatischer Kohlenwasserstoff, ein chlorierter aliphatischer Kohlenwasserstoff, ein aliphatischer Kohlenwasserstoff mit 4 bis 7 Kohlenstoffatomen je Molekül oder eine Mischung derselben verwendet wird.

3. Verfahren nach Anspruch 1 oder 2, dadurch gekennzeichnet, daß nach der Neutralisation mit Zinkacetat eine lineare, gesättigte, organische Säure mit 10 bis 40 Kohlenstoffatomen je Molekül in ausreichender Menge zugesetzt wird, um weniger als 35 Gewichtsteile Zinksalz der Säure bezogen auf 100 Gewichtsteile des neutralisierten sulfonierten Polymers zu bilden, wobei das überschüssige Zinkacetat in situ mit der organischen Säure unter Bildung eines Zinksalzes der organischen Säure reagiert.

4. Verfahren nach Anspruch 3, dadurch gekennzeichnet, daß die Carbonsäure Stearinsäure ist.

5. Verfahren nach Anspruch 1 bis 4, dadurch gekennzeichnet, daß das zinkneutralisierte sulfonierte Polymer durch Wasserdampfdestillation aus dem gelfreien Kitt entfernt wird.

6. Verfahren nach Anspruch 1 bis 5, dadurch gekennzeichnet, daß das sulfonierte Polymer aus einem elastomeren Kohlenwasserstoffpolymer hergestellt ist.

7. Verfahren nach Anspruch 6, dadurch gekennzeichnet, daß das elastomere Kohlenwasserstoffpolymer ein Butylgummi oder eine EPDM-Terpolymer ist.

8. Zusammensetzung, die einen Kitt aus einem zinkneutralisierten sulfonierten Butylgummi gelöst in einem nichtreaktiven Lösungsmittel enthält, wobei der Kitt eine Brookfield-Viskosität bei 0,6 U/Min. und einer Temperatur von 25°C bis nicht mehr als 35°C von weniger als 50 Pa.s (50000 cPs) besitzt, dadurch gekennzeichnet, daß sie aus

(a) 100 Gewichtsteilen sulfoniertem Butylgummi mit 0,1 bis 10,0 Mol% olefinische Ungesättigtheiten und einer Mooney-Viskosität bei 100°C von 20 oder weniger, das 10 bis 50 Milliäquivalente Sulfonatgruppen je 100 g des Butylgummis aufweist und weniger als 5 Gew.% Gel enthält, wobei die Sulfonatgruppen vollständig mit Zinkkationen unter Verwendung eines Lösungsmittelsystems neutralisiert sind, das aus Methanol oder einer Mischung von Methanol und Wasser besteht, wobei die Menge an Methanol bezogen auf das nichtreaktive Lösungsmittel mindestens 2 oder weniger als 10 Volumenprozent und die Menge an Wasser bezogen auf das gemischte Lösungsmittel aus Methanol und Wasser weniger als 25 Volumenprozent betragen und

(b) 8 bis 30 Gewichtsteilen eines Zinksalzes einer linearen, gesättigten, organischen $C_{10}$—$C_{40}$-Säure je 100 Teile des sulfonierten Butylgummis besteht.

9. Zusammensetzung nach Anspruch 8, dadurch gekennzeichnet, daß das Zinksalz der organischen Säure Zinkstearat ist.

## Revendications

1. Procédé de préparation d'une solution d'un polymère sulfoné neutralisé au zinc dans un solvant non réactif, ledit polymère étant dérivé d'un élastomère ayant des sites de non-saturation oléfinique, en sorte qu'il présente 0,1 à 10,0 moles % de non-saturation oléfinique, ladite solution ayant une viscosité Brookfield à 0,6 tr/min et à une température de 25°C à pas plus de 35°C, de moins de 50 Pa.s (50,000 cps), ledit polymère sulfoné portant 10 à 50 meq. de groupes sulfonate par 100 g de polymère et contenant moins de 5% en poids de gel, qui consiste à neutraliser ledit polymère sulfoné dissous dans un solvant non réactif avec un excès d'acétate de zinc dissous dans un système de solvants comprenant du méthanol ou un mélange de méthanol et d'eau pour former ledit polymère sulfoné neutralisé au zinc, le pourcentage en volume de méthanol par rapport au solvant non réactif étant au moins égal à 2 et inférieur à 10, le pourcentage en volume d'eau sur la base du solvant mixte formé de méthanol et d'eau étant inférieur à 25 et la concentration en acétate de zinc dihydraté dans le mélange de solvants allant de 5 à 35 g par 100 g de solvant.

2. Procédé suivant la revendication 1, dans lequel le solvant non réactif est un hydrocarbure aromatique halogéné, un hydrocarbure aliphatique chloré, un hydrocarbure aliphatique ayant 4 à 7 atomes de carbone par molécule ou leur mélange.

3. Procédé suivant l'une des revendications 1 et 2, qui comprend l'addition d'un acide organique saturé linéaire ayant 10 à 40 atomes de carbone par molécule après ladite neutralisation par l'acétate de zinc, l'acide organique étant ajouté en quantité suffisante pour former moins de 35 parties en poids de sel de zinc de l'acide, sur la base de 100 parties en poids du polymère sulfoné neutralisé, ledit acétate de zinc en excès réagissant avec ledit acide organique pour former ainsi un sel de zinc dudit acid organique in situ.

4. Procédé suivant la revendication 3, dans lequel ledit acide carboxylique est l'acide stéarique.

5. Procédé suivant l'une quelconque des revendications précédentes, dans lequel ledit polymère sulfoné neutralisé par le zinc est éliminé de la solution dépourvue de gel par entraînement à la vapeur.

6. Procédé suivant l'une quelconque des revendications précédentes, dans lequel ledit polymère sulfoné est formé à partir d'un polymère élastomérique hydrocarboné.

7. Procédé suivant la revendication 6, dans lequel ledit polymère élastomérique hydrocarboné est un butyl-caoutchouc ou un terpolymère EPDM.

8. Composition renfermant une solution d'un butyl-caoutchouc sulfoné neutralisé par le zinc, dans un solvant non réactif, ladite solution ayant une viscosité Brookfield à 0.6 tr/min et à une temperature de 25°C à pas plus de 35°C de moins de 50 Pa.s (50,000 cps), qui comprend:

(a) 100 parties en poids de butyl-caoutchouc sulfoné présentant 0,1 à 10,0 moles% de non-saturation oléfinique, ayant une viscosité Mooney à 100°C égale à 20 ou moins et ayant 10 à 50 meq. de groupes sulfonate par 100 g dudit butyl-caoutchouc et contentant moins de 5% en poids de gel; lesdits groupes sulfonate étant complètement neutralisés avec un cation zinc, en utilisant un système de solvant formé de méthanol ou d'un mélange de méthanol et d'eau dans lequel le pourcentage en volume de méthanol sur la base du solvant non réactif est au moins égal à 2 et inférieur à 10 et le

pourcentage en volume d'eau sur la base du solvant mixte de méthanol et d'eau est inférieur à 25; et

(b) 8 à 30 parties en poids d'un sel de zinc d'un acide organique saturé linéaire en $C_{10}$ à $C_{40}$, par 100 parties dudit butyl-caoutchouc sulfoné.

9. Composition suivant la revendication 8, dans laquelle ledit sel de zinc dudit acide organique est le stéarate de zinc.